Europäisches Patentamt

European Patent Office

Office européen des brevets

(19)

(11) Veröffentlichungsnummer : **0 084 596**
**B1**

(12) **EUROPÄISCHE PATENTSCHRIFT**

(45) Veröffentlichungstag der Patentschrift :
**30.12.86**

(21) Anmeldenummer : **82108630.3**

(22) Anmeldetag : **18.09.82**

(51) Int. Cl.⁴ : **F 16 J 15/36**

(54) **Gleitringdichtung.**

(30) Priorität : 25.01.82 DE 3202274
18.06.82 DE 3222759

(43) Veröffentlichungstag der Anmeldung :
03.08.83 Patentblatt 83/31

(45) Bekanntmachung des Hinweises auf die Patenterteilung : 30.12.86 Patentblatt 86/52

(84) Benannte Vertragsstaaten :
FR GB IT NL SE

(56) Entgegenhaltungen :
DE-A- 2 921 669
DE-B- 1 051 087
DE-B- 1 061 144
DE-U- 1 850 250
DE-U- 1 858 504
FR-A-   963 942
FR-A- 2 436 305
GB-A-   888 118
US-A- 2 328 160
US-A- 2 440 394
US-A- 2 646 296

(73) Patentinhaber : GOETZE AG
Bürgermeister-Schmidt-Strasse 17
D-5093 Burscheid 1 (DE)

(72) Erfinder : Vossieck, Paul
Dürscheid 4
D-5093 Burscheid (DE)

## Beschreibung

Die Erfindung betrifft eine Gleitringdichtung, bestehend aus einem Gleitring, einem Balgen, der den Gleitring im Bereich einer Umfangsfläche mindestens teilweise übergreift und im Bereich seiner dem Gleitring abgewandten Umfangsfläche in ein sich etwa axial erstreckendes Haftteil ausläuft, sowie einer sich zwischen Haftteil und Balgen erstreckenden, im Querschnitt etwa kegelförmigen, aus mindestens drei innerhalb der Gleitringdichtung angeordneten Windungen bestehenden Schraubenfeder.

Durch die FR-A-963 942 ist eine Gleitringdichtung bekannt, die aus einem Gleitring und einem damit verbundenen Gummi-Balgen besteht, wobei letzterer auf der dem Gleitring abgewandten Seite als Haftteil zum Einsetzen der Dichtung in eine entsprechende Aufnahmebohrung des abzudichtenden Mediums ausgebildet ist. Die axiale Anpressung des Gleitringes erfolgt mittels einer innerhalb des Balgens konzentrisch angeordneten, im Querschnitt etwa kegelförmigen oder zylindrischen Schraubenfeder, die sich vom Haftteil bis zum Gleitring erstreckt. Zur Abstützung der Feder gegenüber dem Haftteil ist ein winkelförmig profilierter Metallring in den Haftteil eingeknüpft.

Eine ähnlich gestaltete Gleitringdichtung zeigt die DE-B-1 051 087. Die im Querschnitt ebenfalls kegelige, drei Windungen aufweisende Schraubenfeder liegt mit der durchmesserkleineren Windung am Gleitringrücken über eine Gummischicht des Balgens an. Die durchmessergrößere Windung ist von einem im Bereich des Haftteiles des Balgens eingeklemmten Metallprofilring umgeben, der die Feder sowohl radial als auch axial abstützt.

In beiden Fällen erfolgt eine Drehmomentübertragung vom Haftteil auf den Gleitring durch Klemmen der betreffenden Bereiche mittels metallischer Versteifungselemente beziehungsweise Vulkanisation. Ferner ist eine Vielzahl von Bauteilen notwendig.

Des weiteren ist durch das deutsche Gebrauchsmuster 1 858 504 eine Gleitringdichtung bekannt, bei der die den axialen Dichtdruck bewirkende zylindrische Feder mit ihren Endwindungen den Balgen umschließt und auf der einen Seite einen radialen Druck auf den Gleitring und im eingebauten Zustand auf der anderen Seite über den Balg ebenfalls einen radialen Druck auf die Welle ausübt. Hier ist der Durchmesser des Balgens größer als der Federwindungs-Innendurchmesser ausgebildet. Der Balgen ist hier radial so stark ausgebildet, daß die Feder gar keine radiale Kraft in Richtung auf die Welle ausüben kann, diese vielmehr durch den Balgen selber aufgebracht wird, da bei solchen Dichtungen der Innendurchmesser des Elastomerteiles in der Regel kleiner ausgebildet ist als der Wellendurchmesser. Somit weitet sich das Elastomerteil beim axialen Aufpressen auf die Welle auf und liegt unter radialer Eigenspannung an derselben an.

Der Erfindung liegt die Aufgabe zugrunde, eine Gleitringdichtung der gattungsgemäßen Art mit einfachen Mitteln so zu verbessern, daß durch die Feder neben ihrer Führungseigenschaft auch eine optimale Drehmomentübertragung vom Gleitring auf das Haftteil sichergestellt ist.

Diese Aufgabe wird erfindungsgemäß dadurch gelöst, daß die Windungen mit dem kleinsten und dem größten Durchmesser, die Gleitringdichtung radial in entgegengesetzten Richtungen verspannend, zum einen mit dem Haftteil und zum anderen mit dem den Gleitring übergreifenden Balgen zusammenwirken. Durch diese ebenso einfache wie auch kostengünstige Lösung wird sowohl der Gleitring im Balgen gehalten als auch das Haftteil im Einbauzustand an eine korrespondierende Aufnahmebohrung gedrückt. Hierbei sind die radialen Federkräfte vorzugsweise größer als im nicht eingebauten Zustand.

Eine bei Kegelfedern gängige Ausführungsform weist drei Windungen auf, wobei die mittlere Windung etwa auf halber radialer und vorzugsweise auf halber axialer Höhe zwischen den beiden End-Windungen angeordnet ist.

Einem weiteren Gedanken der Erfindung gemäß, sind im Bereich des Haftteiles und/oder des Balgens zwei oder mehr Windungen vorgesehen, die mit axialer Vorspannung aneinander gewickelt sind. Damit ist der Vorteil verbunden, daß ein in diesem Bereich stabiles Teil gebildet wird, das ein sicheres Einpressen der Gleitringdichtung in die Aufnahmebohrung gewährleistet, ohne daß das elastomere Haftteil von dem Federbereich abrutschen oder aber es zu Verkantungen in diesen Bereichen kommen kann.

Weiterhin vorteilhaft ist zu sehen, daß auch die zusätzlichen Windungen Radialkräfte auf die Umfangsflächen der korrespondierenden Teile ausüben, so daß eine sichere Übertragung des Drehmomentes, auch in extremen Situationen, gewährleistet ist.

Es besteht weiterhin die Möglichkeit — je nach Anwendungsfall — unterschiedliche radiale und axiale Kräfte durch die Feder auf die damit verbundenen Teile auszuüben, indem die Windungsquerschnitte voneinander abweichen. Dies kann zum Beispiel durch Stauchen gewisser Federbereiche entweder vor oder nach dem Wickeln ausgeführt werden.

Eine bevorzugte Lösung ist jedoch darin zu sehen, daß die Windungen im Bereich des Haftteiles und/oder des Balgens mit unterschiedlichen Radien gewickelt sind, dergestalt, daß die Windungen von der Stirnseite des Haftteiles und/oder des Balgens, ausgehend radial in Richtung auf die jeweilige Umfangsfläche, größer beziehungsweise kleiner gewickelt werden. Durch diese Maßnahme soll sichergestellt werden, daß beim axialen Zusammendrücken der Gleitringdichtung im Einbauzustand nicht die jeweils vorletzte Windung axial unter der letzten Windung des Haftteiles herausspringt und so die Wirkungsweise der Gleitringdichtung negativ beeinflußt. Des weiteren wird durch diese Maßnahme eine Erhöhung der radialen Anpreßkraft des Haftteiles gegen die korrespondierende Aufnahmebohrung beziehungsweise des Balgens gegen den Gleitring sichergestellt.

Des weiteren kann es sinnvoll sein, daß zumindest die ersten beiden Windungen im Bereich des Haftteiles und/oder des Balgens fest miteinander verbunden sind. Durch diese Maßnahme werden im wesentlichen die gleichen Vorteile, wie vorab beschrieben, erzielt, nämlich daß das Herausspringen der vorletzten Windung unter der letzten Windung bei axialer Druckbeaufschlagung vermieden wird. Die Verbindung kann durch mechanisches Verklammern erfolgen, bevorzugt ist jedoch das punktförmige Verschweißen beziehungsweise Verkleben der angesprochenen Windungen.

In der Regel treten im Einbauzustand der Gleitringdichtung im Bereich des Haftteiles die größten zu übertragenden Kräfte auf, so daß vorgeschlagen wird, daß die Feder in diesem Bereich auch eine größere radiale Kraft auf das Haftteil als auf den Balgen ausübt, um so jeder im Betriebszustand auftretenden Störung gerecht zu werden.

Durch die Erfindung ist sichergestellt, daß durch die Elastizität der Feder ein relativ leichter Einbau (axiales Einpressen) ermöglicht wird, bei gleichzeitigem guten Sitz des Haftteiles in der Aufnahmebohrung durch die radial wirkende Federkraft und gleichzeitiger guter Übertragung des Drehmomentes vom Gleitring auf das Haftteil.

Neben Federwindungen mit rundem Querschnittsprofil kommen hier, je nach Anwendungsfall, auch Federwindungen mit einem quadratischen oder einem rechteckigen Querschnittsprofil zur Anwendung.

Die Erfindung ist in der Zeichnung dargestellt und wird im folgenden näher beschrieben. Es zeigen :

Figuren 1 bis 3   Gleitringdichtungen mit unterschiedlich gestalteten Federn

Figur 2a  Feder mit durchmessergrößer gewickelter Windung im Bereich des Haftteiles.

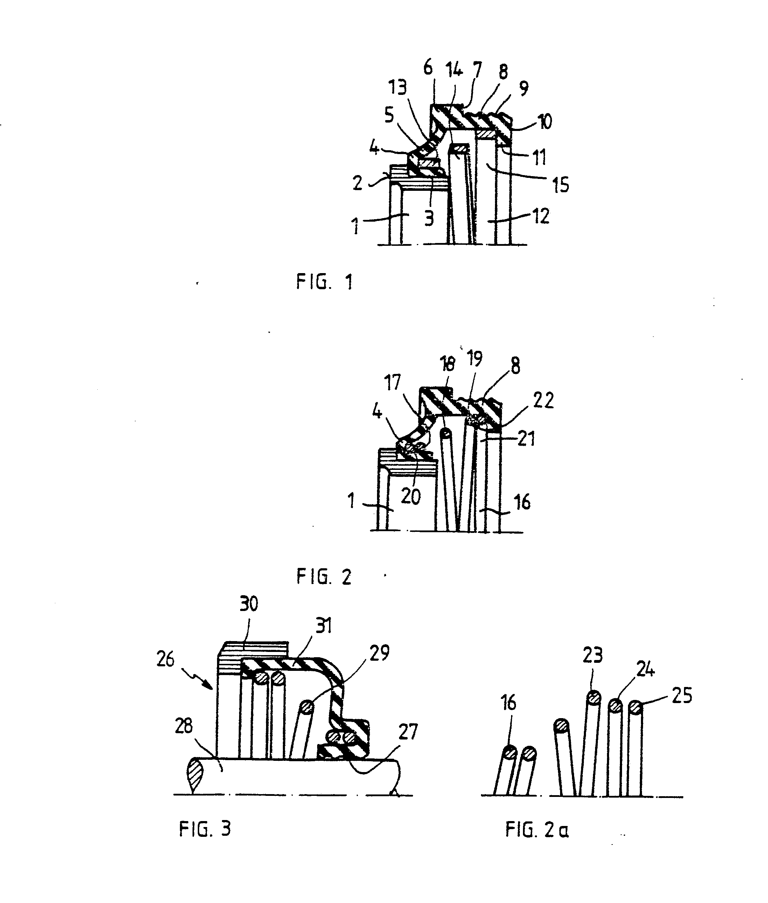

Die in Figur 1 dargestellte Gleitringdichtung besteht aus einem Gleitring 1, der in seiner Gleitfläche 2 abgewandten Bereich 3 abgestuft ausgebildet ist. In diesem Bereich 3 ist ein mit dem Gleitring 1 radial übergreifender Balgen 4 vorgesehen, der zunächst im Bereich des Gleitringes 1 einen etwa U-förmigen Profilquerschnitt aufweist und sich dann unter Bildung einer Wölbung 5 im wesentlichen radial erstreckt. In seinem dem Gleitring 1 abgewandten Umfangsbereich 6 schließt sich über einen Axialanschlag 7 das Haftteil 8 an, welches zur besseren Verklammerung im nicht weiter dargestellten Aufnahmeteil mit einem wellenförmigen Profil 9 versehen ist. Im Bereich der Stirnfläche 10 des Haftteiles 8 schließt sich, radial nach innen gerichtet, eine Halteklaue 11 an. Axial zwischen dem Haftteil 8 und dem U-förmigen Teil des Balgens 4 ist eine Druckfeder 12 vorgesehen, die im Einbauzustand der Gleitringdichtung die nötige Axialkraft erzeugt, um den Gleitring 1 dichtend am einem Gegenring oder einer korrespondierenden Dichtfläche zu halten. Die Feder 12 ist etwa kegelförmig ausgebildet und weist ein rechteckiges Querschnittsprofil auf. Die einzelnen Federwindungen 13 bis 15 sind innerhalb der Gleitringdichtung angeordnet, wobei die Windungen 13 und 15, in entgegengesetzter Richtung wirkend, jeweils eine definierte Radialkraft auf den Balgen 4 und auf das Haftteil 8 ausüben. Damit soll bezweckt werden, daß zum einen der Gleitring 1 radial sicher vom Balgen 4 und zum anderen das Haftteil 8 im Einbauzustand der Gleitringdichtung sicher in dem nicht weiter dargestellten Aufnahmeteil gehalten wird. Weiterhin wird eine optimale Drehmomentübertragung zwischen Gleitring 1 und Haftteil 8 ohne weitere Zusatzteile sichergestellt.

Figur 2 zeigt die gleiche Gleitringdichtung wie in Figur 1, so daß gleiche Bezugszeichen gelten mit dem Unterschied, daß die hier verwendete Feder 16 kein rechteckiges, sondern ein rundes Querschnittsprofil aufweist. Auch diese Feder 16 ist kegelförmig gestaltet. Zusätzlich zu den auf einer Mantellinie liegenden Windungen 17 bis 19 sind sowohl im Bereich des Haftteiles 8 als auch im Bereich des U-förmigen Teiles des Balgens 4 zusätzliche Windungen 20, 21 vorgesehen, die, um Stabilität sowohl in radialer als auch in axialer Richtung zu gewährleisten, mit axialer Vorspannung aneinander gewickelt sind. Je nach Anwendungsfall und axialer Höhe des Haftteiles kann es zweckmäßig sein, mehr als zwei Windungen axial hintereinander vorzusehen. Wie schon zu Figur 1 geschildert, hat auch die Feder 16 die Aufgabe, zum einen den Balgen 4 radial gegen den Gleitring 1 zu drücken und zum anderen einen sicheren Sitz des Haftteiles 8 in der nicht weiter dargestellten Aufnahmebohrung zu gewährleisten. Um zu vermeiden, daß die vorletzte Windung 19 bei axialer Druckbeaufschlagung der Gleitringdichtung im Einbauzustand axial unter der letzten Windung 21 herausspringt und somit die Wirkungsweise der Feder 16 beeinflußt wird, sind die beiden Windungen durch Punktschweißung 22 an mehreren Stellen ihres Umfanges miteinander verbunden.

Die in Figur 3 dargestellte Gleitringdichtung 26 ist ähnlich der in den Figuren 1 und 2 abgebildeten zu sehen, mit dem Unterschied, daß das Haftteil 27 nicht gegen die Umfangsfläche einer Bohrung, sondern gegen eine Welle 28 angedrückt wird. Die Feder 29 übt in analoger Weise radial gegensätzliche Kräfte zum einen auf den den Gleitring 30 tragenden Balgen 31 und zum anderen auf das Haftteil 27 aus.

Figur 2a zeigt eine weitere Variante einer kegeligen Feder 16 gemäß der Erfindung. Im Bereich des nicht weiter dargestellten Haftteiles weist die Feder 16 drei Windungen 23, 24, 25 auf, von denen die Windungen 24, 25 auf einem Durchmesser liegen und die Windung 23 mit in Richtung des Haftteiles größerem Durchmesser gewickelt ist.

## Patentansprüche

1. Gleitringdichtung, bestehend aus einem Gleitring (1, 30), einem Balgen (4, 31), der den Gleitring (1, 30) im Bereich einer Umfangsfläche mindestens teilweise übergreift und im Bereich seiner dem Gleitring (1, 30) abgewandten Umfangsfläche in ein sich etwa axial erstreckendes Haftteil (8, 27) ausläuft, sowie einer sich zwischen Haftteil (8, 27) und Balgen (4, 31) erstreckenden, im Querschnitt etwa kegelförmigen, aus mindestens drei innerhalb der Gleitringdichtung angeordneten Windungen (13 bis 15 und 17 bis 19) bestehenden Schraubenfeder (12, 16, 29), dadurch gekennzeichnet, daß die Windungen (13, 15 und 17, 19) mit dem kleinsten und dem größten Durchmesser, die Gleitringdichtung radial in entgegengesetzten Richtungen verspannend, zum einen mit dem Haftteil (8, 27) und zum anderen mit dem den Gleitring (1, 30) übergreifenden Balgen (4, 31) zusammenwirken.

2. Gleitringdichtung nach Anspruch 1, dadurch gekennzeichnet, daß die radialen Federkräfte im Einbauzustand der Gleitringdichtung größer sind als im nicht eingebauten Zustand.

3. Gleitringdichtung mit einer im kegeligen Teil drei Windungen aufweisenden Schraubenfeder nach den Ansprüchen 1 und 2, dadurch gekennzeichnet, daß die mittlere Windung (14 und 18) axial etwa mittig zwischen den beiden anderen Windungen (13, 15 und 17, 19) angeordnet ist.

4. Gleitringdichtung nach den Ansprüchen 1 bis 3, dadurch gekennzeichnet, daß im Bereich des Haftteiles (8, 27) und/oder des Balgens (4, 31) zwei oder mehr Windungen (17, 20, 19, 21, 23 bis 25) vorgesehen sind, die mit axialer Vorspannung aneinander gewickelt sind.

5. Gleitringdichtung nach den Ansprüchen 1 bis 4, dadurch gekennzeichnet, daß diese zusätzlichen Windungen (20, 21, 24, 25) ebenfalls Radialkräfte auf die korrespondierenden Teile ausüben.

6. Gleitringdichtung nach den Ansprüchen 1 bis 5, dadurch gekennzeichnet, daß die Windungen (23, 24, 25) im Bereich des Haftteiles (8, 27) und/oder des Balgens (4, 31) mit unterschiedlichen Radien gewickelt sind.

7. Gleitringdichtung nach den Ansprüchen 1 bis 6, dadurch gekennzeichnet, daß die Windungen (23), von der Stirnseite (10) des Haftteiles (8, 27) und/oder des Balgens (4, 31) ausgehend, in Richtung der jeweiligen Umfangsfläche größer beziehungsweise kleiner gewickelt sind.

8. Gleitringdichtung nach den Ansprüchen 1 bis 7, dadurch gekennzeichnet, daß zumindest die ersten beiden Windungen (19, 21) im Bereich des Haftteiles (8, 27) und/oder des Balgens (4, 31) fest miteinander verbunden sind.

9. Gleitringdichtung nach Anspruch 6, dadurch gekennzeichnet, daß die Windungen (19, 21) aneinandergeschweißt oder -geklebt sind.

10. Gleitringdichtung nach den Ansprüchen 1 bis 9, dadurch gekennzeichnet, daß die Windung beziehungsweise die Windungen (19, 21, 23) im Bereich des Haftteiles (8, 27) eine größere radiale Kraft ausüben als die Windung beziehungsweise die Windungen (17, 20) im Bereich des Balgens (4, 31).

11. Gleitringdichtung nach den Ansprüchen 1 bis 10, dadurch gekennzeichnet, daß die Federwindungen (13 bis 15) ein quadratisches oder ein rechteckiges Querschnittsprofil aufweisen.

## Claims

1. Mechanical face seal comprising a seal ring (1, 30), a bellows (4, 31) which at least partially overlaps the seal ring (1, 30) in the region of one circumferential surface and terminates in a gripping section (8, 27) running approximately axially in the region of the circumferential surface of the bellows (4, 31) facing away from the seal ring (1, 30), and a helical spring (12, 16, 29) of roughly conical cross section consisting of at least three coils (13 to 15 and 17 to 19) arranged inside the mechanical face seal and running between the gripping section (8, 27) and the bellows (4, 31), characterized by the fact that the coils (13, 15 and 17, 19) with the samllest and the largest diameter interact on the one hand with the gripping section (8, 27) and on the other with the bellows (4, 31) overlapping the seal ring (1, 30) and tension the mechanical face seal radially in opposite directions.

2. Mechanical face seal according to Claim 1, characterized by the fact that the radial spring force with the mechanical face seal in installed condition is greater than in non-installed condition.

3. Mechanical face seal having a helical spring with three coils in the conical section according to Claims 1 and 2, characterized by the fact that axially the middle coil (14 and 18) is positioned approximately centrally between the two other coils (13, 15 and 17, 19).

4. Mechanical face seal according to Claims 1 to 3, characterized by the fact that two or more coils (17, 20, 19, 21 23 to 25) wound against one another with axial pretension are provided in the region of the gripping section (8, 27) and/or of the bellows (4, 31).

5. Mechanical face seal according to Claims 1 to 4, characterized by the fact that these additional coils (20, 21, 24, 25) likewise exert radial forces on the corresponding parts.

6. Mechanical face seal according to Claims 1 to 5, characterized by the fact that the coils (23, 24, 25) in the region of the gripping section (8, 27) and/or of the bellows (4, 31) are wound with different radii.

7. Mechanical face seal according to Claims 1 to 6, characterized by the fact that, proceeding from the face (10) of the gripping section (8, 27) and/or of the bellows (4, 31), the coils (23) are wound larger or alternatively smaller in the direction of the respective circumferential surfaces.

8. Mechanical face seal according to Claims 1 to 7, characterized by the fact that at least the first two coils (19, 21) in the region of the gripping section (8, 27) and/or of the bellows (4, 31) are firmly connected together.

9. Mechanical face seal according to Claim 8, characterized by the fact that the coils (19, 21) are welded or bonded together.

10. Mechanical face seal according to Claims 1 to 9, characterized by the fact that the coil or coils (19, 21, 23) in the region of the gripping section (8, 27) exert a greater radial force than the coil or coils (17, 20) in the region of the bellows (4, 31).

11. Mechanical face seal according to Claims 1 to 10, characterized by the fact that the spring coils (13 to 15) possess a square or rectangular cross-sectional profile.

**Revendications**

1. Garniture étanche à bague glissante comportant une bague glissante (1, 30), un soufflet (4, 31) qui chevauche au moins en partie la bague glissante (1, 30) au niveau d'une surface périphérique et qui se prolonge en un organe de fixation (8, 27) s'étendant à peu près axialement au niveau de sa surface périphérique écartée de la bague glissante (1, 30), de même qu'un ressort à boudin (12, 16, 29) ayant en coupe à peu près la forme d'un cône, s'étendant entre l'organe de fixation (8, 27) et le soufflet (4, 31) et comportant au moins trois spires (13 à 15 et 17 à 19) déposées à l'intérieur de la garniture étanche à bague glissante, caractérisée en ce que les spires (13, 15 et 17, 19) de plus petit et de plus grand diamètres qui tendent la garniture étanche à bague glissante radialement dans des directions opposées, coopèrent d'une part avec l'organe de fixation (8, 27) et d'autre part avec le soufflet (4, 31) chevauchant la bague glissante (1, 30).

2. Garniture étanche à bague glissante selon la revendication 1, caractérisée en ce que les forces radiales du ressort en position de montage de la garniture étanche à bague glissante sont plus importantes qu'en position non montée.

3. Garniture étanche à bague glissante munie d'un ressort à boudin comportant une partie conique à trois spires selon les revendications 1 et 2, caractérisée en ce que la spire médiane (14 et 18) est disposée axialement environ au milieu des deux autres spires (13, 15 et 17, 19).

4. Garniture étanche à bague glissante selon les revendications 1 à 3, caractérisée en ce que deux ou plusieurs spires (17, 20, 19, 21, 23 à 25) sont prévues au niveau de l'organe de fixation (8, 27) et/ou du soufflet (4, 31), lesquelles spires sont bobinées les unes contre les autres avec une tension axiale initiale.

5. Garniture étanche à bague glissante selon les revendications 1 à 4, caractérisée en ce que ces spires additionnelles (20, 21, 24, 25) exercent également des forces radiales sur les parties correspondantes.

6. Garniture étanche à bague glissante selon les revendications 1 à 5, caractérisée en ce que les spires sont bobinées avec des rayons différents au niveau de l'organe de fixation (8, 27) et/ou du soufflet (4, 31).

7. Garniture étanche à bague glissante selon les revendications 1 à 6, caractérisée en ce que les spires (23), sortant à partir du côté frontal (10) de l'organe de fixation (8, 27) et/ou du soufflet (4, 31) sont bobinées plus grandes et plus petites en direction de chaque surface périphérique.

8. Garniture étanche à bague glissante selon les revendications 1 à 7, caractérisée en ce qu'au moins les deux premières spires (19, 21) au niveau de l'organe de fixation (8, 27) et/ou du soufflet (4, 31) sont assujetties les unes aux autres fortement.

9. Garniture étanche à bague glissante selon la revendication 8, caractérisée en ce que les spires (19, 21) sont soudées ou collées les unes aux autres.

10. Garniture étanche à bague glissante selon les revendications 1 à 9, caractérisée en ce que les spires (19, 21, 23) située(s) au niveau de l'organe de fixation (8, 27) exerce(nt) une force radiale supérieure à celle qu'exerce(nt) la spire ou les spires (17, 20) au niveau de soufflet (4, 31).

11. Garniture étanche à bague glissante selon les revendications 1 à 10, caractérisée en ce que les spires de ressort (13 à 15) ont une section carrée ou rectangulaire.

FIG. 1

FIG. 2

FIG. 3

FIG. 2 a

1